# EUROPÄISCHE PATENTSCHRIFT

(11) **EP 0 962 106 B1**
(45) Veröffentlichungstag und Bekanntmachung des Hinweises auf die Patenterteilung: **14.08.2002**
(21) Anmeldenummer: 98910604.2
(22) Anmeldetag: 11.02.1998
(51) Int. Cl.: H04Q 3/00, H04M 3/50, H04Q 7/22, H04M 3/487

(54) **VERFAHREN UND KOMMUNIKATIONSNETZ ZUR BEREITSTELLUNG VON ANSAGEN**
METHOD FOR PREPARING ANNOUNCEMENTS AND APPROPRIATE TELECOMMUNICATIONS NETWORK
PROCEDE DE PREPARATION DE MESSAGES ET RESEAU DE TELECOMMUNICATION APPROPRIE

(30) Priorität: 21.02.1997 DE 19707060
(43) Veröffentlichungstag der Anmeldung: 08.12.1999
(73) Patentinhaber: SIEMENS AKTIENGESELLSCHAFT, 80333 München (DE)
(72) Erfinder: NIMPHIUS, Klaus, D-82049 Pullach (DE)
(86) Internationale Anmeldenummer: DE9800377
(87) Internationale Veröffentlichungsnummer: WO9837716

(56) Entgegenhaltungen:
- WO-A-96/13927
- US-A- 5 255 183
- US-A- 5 526 413
- US-A- 5 592 535
- US-A- 5 594 789
- BOSCO F: "VOICE SERVICES ON THE INTELLIGENT NETWORK: INTELLIGENT PERIPHERALS AND SERVICE NODES" CSELT TECHNICAL REPORTS, Bd. 20, Nr. 4, August 1992, Seiten 347-353, XP000607359

## Beschreibung

Kommunikationsnetze, beispielsweise Festnetze oder Mobilfunknetze, z.B. aufgebaut nach Art des bekannten GSM-Mobilfunknetzes (Global System for Mobile Communications), weisen untereinander vernetzte Vermittlungseinrichtungen auf. In dem Mobilfunknetz sind an die Vermittlungseinrichtungen jeweils Basisstationen angeschlossen, mit deren Hilfe über eine Luftschnittstelle Kommunikationsendgeräte anschließbar sind. Im Festnetz sind die Kommunikationsendgeräte über Leitungen mit den Vermittlungseinrichtungen verbunden. Die Kommunikationsendgeräte ermöglichen somit einem Teilnehmer unabhängig von der Netzart den Netzzugang. Die Vermittlungseinrichtungen können darüber hinaus einen Übergang zu weiteren Netzen, z.B. Datenübertragungsnetzen, Festnetzen oder Mobilfunknetzen, bewirken. Im GSM-Mobilfunknetz werden Speichereinheiten, in denen u.a. teilnehmerspezifische Daten zu netzeigenen Diensten gespeichert sind, verwendet. Eine dieser Speichereinheiten ist das Heimatregister, das sich in der Regel an einem fest definierten Ort befindet und in dem die der Registrierung des Teilnehmers zugrundeliegenden Daten abgelegt sind. Abhängig von dem momentanen Aufenthaltsort des mobilen Teilnehmers ist zumindest eine weitere Speichereinheit, das Besucherregister, zuständig. Je nach Aufenthaltsort des mobilen Teilnehmers kann sich die Zuständigkeit, welche Speichereinheit mit den für diesen Teilnehmer gespeicherten spezifischen Daten den Teilnehmer zu bedienen hat, ändern.

Es ist allgemein bekannt, zusätzliche Dienste für die Teilnehmer eines Kommunikationsnetzes - ob Festnetz oder Mobilfunknetz - durch die Struktur eines Intelligenten Netzes mit Dienstesteuerungseinheiten (service control point) zu unterstützen. Diese Dienstesteuerungseinheiten und die darin abgelegten Profile der zusätzlichen Dienste, einschließlich der zu ihrer Realisierung notwendigen Informationen, sind damit unabhängig vom jeweiligen Kommunikationsnetz änderbar. Dabei werden die in einem Intelligenten Netz nutzbaren Dienste in einer Dienstevermittlungseinheit (service switching point) angestoßen, um einen Ausstieg aus der üblichen Anrufverarbeitung zu bewirken und den Zugriff zu den zusätzlichen Diensten zu aktivieren. Einer der Dienste besteht darin, dem Teilnehmer des Kommunikationsnetzes eine oder mehrere Ansagen zur Verfügung zu stellen. Dies wird dadurch erreicht, daß die Ansage von der Dienstevermittlungseinheit angestoßen und von einer mit ihr verbundenen Ansageeinheit (Intelligent Peripheral) ausgeführt wird. Die Ansteuerung der Ansage erfolgt durch eine Dienstesteuerungseinheit über eine INAP-Signalisierung (Intelligent Network Application Part). Nachteilig an dem Verfahren ist, daß alle Ansagen in der Ansageeinheit vordefiniert werden müssen, d.h. zuvor die Ansagen aufzunehmen und in die Ansageeinheit zu laden sind. Diese Vorgehensweise ist unflexibel bezüglich dem Bereitstellen und Einbringen neuer Ansagen, da diese "offline" aufgenommen und in der Ansageeinheit gespeichert werden müssen, bevor eine Nutzung möglich ist. Darüber hinaus ist eine Ansageidentifikation, z.B. mittels einer Ansagerufnummer, zur Auswahl der jeweiligen Ansage bereitzustellen und zu signalisieren. Zwischen Dienstesteuerungseinheit und Dienstevermittlungseinheit sind die entsprechenden Ansageidentifikationen abzustimmen, um die neuen Ansagen nutzen zu können.

Aus der US 5 592 535 sind ein Verfahren und eine Anordnung zur Vergebührung von Anrufverbindungen unter Ausnutzung der Einrichtungen eines Intelligenten Netzes (SCP, SSP) bekannt. Dabei besitzt der mobile Teilnehmer eines Mobilfunknetzes ein Kreditkonto, dessen aktueller Kreditbetrag bei einem Anruf des Teilnehmers mit einem vorgebbaren Minimum-Schwellwert verglichen wird. Die Ausführung der Anrufverbindung erfolgt nur dann, wenn der Kreditbetrag über diesem Schwellwert liegt. Durch die Einbindung der Einrichtungen des Intelligenten Netzes kann das zugehörige INAP-Protokoll (Intelligent Network Application Protocol) an Stelle des MAP-Protokolls (Mobile Application Protocol) angewendet werden.

Aus der US 5 594 789 ist ein Multimedia-Kommuni-kationssystem mit Einrichtungen eines Intelligenten Netzes (SSP, SCP, IP) bekannt, von denen eine Intelligente Systemeinrichtung (IP) eine Spracherkennungseinheit sowie eine Sprachverifizierungseinheit aufweist. Das Multimediasystem nutzt die Spracherkennung und Sprachverifizierung zur Verbindungssteuerung und insbesondere zur Ausführung einer Transaktion, wobei die Dienstesteuerungseinheit (SCP) eine spezielle Datendasis zur Identifikation einer von einem Teilnehmer in ein Terminal oder in ein Telefon eingegebenen Sprachprobe für Authentifikationszwecke aufweist. Ergibt der Vergleich der Sprachprobe mit einem in der Datenbasis gespeicherten Eintrag eine Identität, wird beispielsweise die Transaktion ausgeführt.

Aus "The CAMEL feature, proposed revisions to the stage 1 description", von ETSI/STC/SMG1. 14.03.95, GSM 02.78, Version 0.4.0, Seiten 1-14, ist eine CAMEL (Customized Application for Mobil network Enhanced Logic) Plattform bekannt, mit der die Unterstützung von zusätzlichen anbieterspezifischen Diensten für Teilnehmer ermöglicht werden soll, z.B. auch dann, wenn sie sich im Ausland aufhalten. Damit kann über Netz- und Dienstegrenzen eines Kommunikationsnetzes hinweg ein betreiberspezifischer zusätzlicher Dienst genutzt werden. Dies ist der Fall, wenn die den zusätzlichen Dienst anstoßende Dienstevermittlungseinheit für den angeforderten Dienst die benötigte CAP-Signalisierung (CAMEL Application Part) verarbeiten kann und über die Netzgrenzen hinweg Signalisierungsinformationen von und zum Heimatregister und zur Dienstesteuerungseinheit des zusätzlichen Dienstes ausgetauscht werden können. Für die Ansagen bedeutet dies, daß bei Aufenthalt eines mobilen Teilnehmers in einem anderen Netz als dem Heimatnetz die Ansagen aller anderen Netze dort bekannt und eindeutig identifizierbar sein müssen. Dies bringt einen hohen Abstimmungsaufwand, der außerdem über Netzgrenzen hinweg zu erfolgen hat, mit sich und ist ebenfall unflexibel. Eine Lösung über "Rerouting" von dem Netz, in dem sich der Teilnehmer aufhält, zu seinem Heimatnetz, um die Ansage dort anzulegen, würde zu einer zusätzlichen Belegung von Leitungen führen und damit zusätzliche Übertragungsressourcen erfordern.

Der Erfindung liegt die Aufgabe zugrunde, ein möglichst flexibles Verfahren und ein entsprechendes Kommunikationsnetz zur Bereitstellung der Ansagen für die Teilnehmer anzugeben. Diese Aufgabe wird gemäß der Erfindung hinsichtlich des Verfahrens durch die Merkmale des Patentanspruchs 1 und hinsichtlich des Kommunikationsnetzes durch die Merkmale des Patentanspruchs 14 gelöst. Darüber hinaus sind eine Dienstesteuerungeinheit mit den Merkmalen des Patentanspruchs 11, eine Dienstevermittlungseinheit mit den Merkmalen des Patentanspruchs 12 und eine Ansageeinheit mit den Merkmalen des Patentanspruchs 13 angegeben. Vorteilhafte Weiterbildungen der Erfindung sind den Unteransprüchen zu entnehmen.

Das erfindungsgemäße Verfahren zur Bereitstellung von Ansagen sieht vor, daß ein oder mehrere Ansagetexte in der Dienstesteuerungseinheit eingerichtet werden. Eine auf Grund eines Anrufs des Teilnehmers initiierte Nachricht, in der Informationen über die Unterstützbarkeit von Ansagen durch eine Ansageeinheit enthalten sind, wird von der Dienstesteuerungseinheit empfangen und ausgewertet. Bei Unterstützung einer Ansage durch eine Ansageeinheit wird eine Nachricht, in der der Ansagetext enthalten ist, von der Dienstesteuerungseinheit ausgesendet. Von der Ansageeinheit wird ein empfangener Ansagetext in eine Ansage umgesetzt, die dann auf einem Sprachkanal zum anrufenden Teilnehmer übertragen wird.

Der Vorteil des erfindungsgemäßen Verfahrens liegt darin, daß lediglich die Ansagetexte in einer Dienstesteuerungseinheit - die in der Regel an zentraler Stelle angeordnet ist - eingeführt werden und die Ansagen erst durch Umsetzung der empfangenen Ansagetexte von den Ansageeinheiten angelegt werden. Die zentrale Speicherung von Ansagetexten vermeidet einen aufwendigen Abgleich der Ansagen zwischen Dienstesteuerungseinheit und Dienstevermittlungseinheit bzw. Ansageeinheit über eine entsprechende Signalisierung und ermöglicht eine schnelle und flexible Anpassung von Ansagen an neue Dienste und Diensterweiterungen. Die erhöhte Flexibilität führt zu einer Kostenersparnis, da die Ansageeinheiten nicht mehr bei jeder Änderung oder Hinzunahme einer Ansage neu aufzuladen sind. Das Bereitstellen der Ansagen erfolgt auch ortsunabhängig, ohne daß die Ansagen zuvor in den jeweiligen Ansageeinheiten vordefiniert werden müssen. Damit verringert sich der Aufwand zum Einführen neuer Ansagen erheblich. Das Bereitstellen der Ansagen gemäß der CAMEL Plattform für einen "roamenden" Teilnehmer über Netzgrenzen hinweg ist durch die erfinderische Vorgehensweise wesentlich einfacher - weniger Aufwand an Signalisierung und Leitungsbelegung - durchführbar. Die Ansagen werden dem Teilnehmer sowohl in seinem eigenen Netz als auch in einem fremden Netz - z.B. im Ausland-durch einfache Umsetzung der empfangenen Ansagetexte vor Ort zur Verfügung gestellt. Dies hat für ihn den Vorteil, daß die Ansagen in einer für ihn verständlichen Sprache - vorzugsweise in seiner Heimatsprache - eingespielt werden.

Das erfindungsgemäße Verfahren kann angewendet werden auf Festnetze wie Mobilfunknetze, indem dem anrufenden Teilnehmer die Ansage, gesteuert von einer Dienstesteuerungseinheit und unterstützt durch eine Ansageeinheit, über einen Sprachkanal eingespielt wird. Ein weiterer Vorteil des erfindungsgemäßen Verfahrens besteht darin, die Informationen über die Unterstützbarkeit von Ansagen und den oder die Ansagetexte in Nachrichten übertragen zu können, die Teil der INAP- bzw. CAP-Signalisierung sein werden. Dies bedeutet, daß kein Aufwand an zusätzlichen Leitungen oder Signalisierungnachrichten für das erfindungsgemäße Verfahren erforderlich ist.

Das Kommunikationsnetz gemäß der Erfindung zeichnet sich dadurch aus, daß ein oder mehrere Ansagetexte in der Dienstesteuerungseinheit eingerichtet sind. Eine auf Grund eines Anrufs des Teilnehmers initiierte Nachricht, in der Informationen über die Unterstützbarkeit von Ansagen durch eine Ansageeinheit enthalten sind, wird von der Dienstesteuerungseinheit empfangen und ausgewertet. Bei Unterstützung einer Ansage durch eine Ansageeinheit wird eine Nachricht, in der der Ansagetext enthalten ist, von der Dienstesteuerungseinheit ausgesendet. Von der Ansageeinheit wird ein empfangener Ansagetext in eine Ansage umgesetzt, die dann auf einem Sprachkanal zum anrufenden Teilnehmer übertragen wird.

Eine Dienstesteuerungseinheit zur Unterstützung der Erfindung weist Mittel zum Speichern eines oder mehrerer Ansagetexte sowie Mittel zum Speichern und Auswerten einer auf Grund eines Anrufs des Teilnehmers initiierten Nachricht auf, in der Informationen über die Unterstützbarkeit von Ansagen durch eine Ansageeinheit enthalten sind. Darüber hinaus ist die Dienstevermittlungseinheit mit Mittel zum Aussenden einer Nachricht, in der der Ansagetext enthalten ist, zu einer die Ansage unterstützenden Ansageeinheit versehen, von der der empfangene Ansagetext in eine Ansage umgesetzt wird, die dann über eine Dienstevermittlungseinheit auf einem Sprachkanal zum anrufenden Teilnehmer übertragen wird.

Eine Dienstevermittlungseinheit zur Unterstützung der Erfindung weist Mittel zum Empfang der Nachricht, in der der Ansagetext enthalten ist, und Mittel zum Aussenden des Ansagetextes zu einer die Ansage unterstützenden Ansageeinheit auf, von der dann der empfangene Ansagetext in eine Ansage umgesetzt wird, die über eine Dienstevermittlungseinheit auf einem Sprachkanal zum anrufenden Teilnehmer übertragen wird.

Eine Ansageeinheit zur Unterstützung der Erfindung weist Mittel zum Empfang der Nachricht, in der ein Ansagetext enthalten ist, und Mittel zum Umsetzen des Ansagetextes in eine Ansage auf, die dann über eine Dienstevermittlungseinheit auf einem Sprachkanal zum anrufenden Teilnehmer übertragen wird.

Anhand von zeichnerischen Darstellungen wird der Erfindungsgegenstand im folgenden näher erläutert.

Dabei zeigen
- FIG 1: das Blockschaltbild eines Kommunikationsnetzes,
- FIG 2: eine schematische Darstellung des Nachrichtenflusses zur Bereitstellung von Ansagen mit einer Dienstesteuerungseinheit und einer Dienstevermittlungseinheit,
- FIG 3: eine schematische Darstellung des Nachrichtenflusses zur Bereitstellung von Ansagen mit einer Dienstesteuerungseinheit und zwei Dienstevermittlungseinheiten, und
- FIG 4: eine schematische Darstellung eines netzübergreifenden Nachrichtenflusses zur Bereitstellung von Ansagen für einen nicht in seinem Heimatnetz sich aufhaltenden mobilen Teilnehmer.

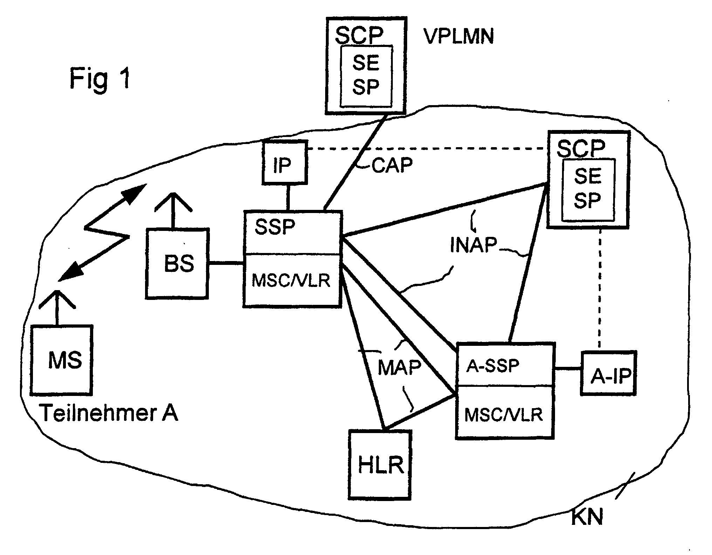

Am Beispiel eines Mobilfunknetzes gemäß FIG 1, das nach dem GSM-Standard betrieben wird, soll das Kommunikationsnetz und das Verfahren gemäß der Erfindung erläutert werden. Die Erfindung ist nicht auf mobile Netze beschränkt, sondern ebenso in Festnetzen anwendbar. Das Kommunikationsnetz KN weist üblicherweise mehrere Vermittlungseinrichtungen MSC/VLR auf, die miteinander verbunden sind. Eine Vermittlungseinrichtung MSC/VLR stellt die Verbindung zu einem mobilen Teilnehmer über eine Basisstation BS, die an die Vermittlungseinrichtung VLR/MSC leitungsgebunden angeschlossen ist, und über eine Luftschnittstelle zwischen Basisstation BS und einer Mobilstation MS her. Die Mobilstation MS ist das Kommunikationsendgerät eines mobilen Teilnehmers A, der in den nachfolgend beschriebenen Beispielen einen Anruf zu einem Zielteilnehmer initiiert (MOC, Mobile Originated Call). Eine weitere Vermittlungseinrichtung - die nicht dargestellt ist - bildet den Netzübergang in ein weiteres Netz, z.B. ein Festnetz.

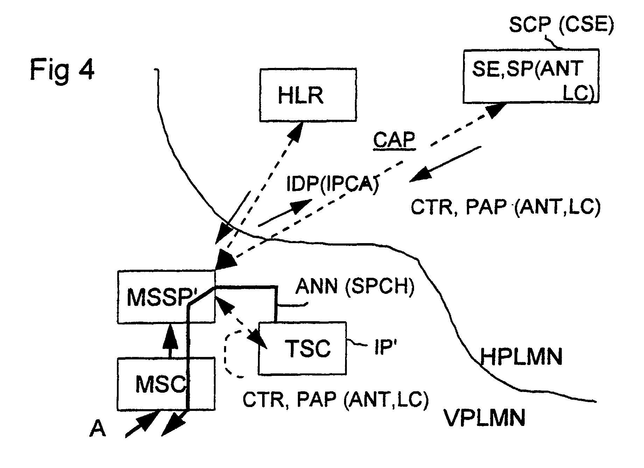

Weiterhin enthält das Kommunikationsnetz KN Dienstesteuerungseinheiten SCP (werden nach CAMEL Phase 1 auch als CSE - CAMEL service environment bezeichnet, siehe auch FIG 4) und Dienstevermittlungseinheiten SSP, A-SSP zur Unterstützung der Netzstruktur eines Intelligenten Netzes. Die an die Basisstation BS angeschlossene Vermittlungseinrichtung MSC/VLR weist als Untersystem die Dienstevermittlungseinheit SSP auf, während der anderen Vermittlungseinrichtung MSC/VLR die Dienstevermittlungseinheit A-SSP zugeordnet ist. Bei diesen Verbindungen ist es nicht notwendig, daß jede Dienstesteuerungseinheit SCP mit jeder Vermittlungseinrichtung MSC/VLR oder Dienstevermittlungseinheit SSP, A-SSP direkt verbunden ist. Es genügt, wenn diese über das Kommunikationsnetz KN odere andere Netze über eine Nr.7-Signalisierung erreichbar sind. Im vorliegenden Beispiel liegt eine Dienstesteuerungseinheit SCP im Kommunikationsnetz KN und ist mit den Dienstevermittlungseinheiten SSP und A-SSP über die INAP-Signalisierung direkt verbunden, während eine andere Dienstesteuerungseinheit SCP in einem Besuchernetz VPLMN des länderübergreifenden GSM-Mobilfunknetzes angeordnet und nur mit der Dienstevermittlungseinheit SSP über die CAP-Signalisierung direkt verbunden ist.

Nach FIG 1 sind Ansageeinheiten IP, A-IP zum Anlegen von variablen Ansagen für die Teilnehmer des Kommunikationsnetzes KN an die Dienstevermittlungseinheiten SSP, A-SSP angeschlossen. Sie werden von der Dienstesteuerungseinheit SCP direkt oder über die jeweilige Dienstevermittlungseinheit SSP, A-SSP mittels der INAP-Signalisierung angesteuert. Zumindest eine Speichereinheit HLR ist im Kommunikationsnetz KN als Heimatregister des mobilen Teilnehmers A angeordnet und mit den beiden hier beispielhaft dargestellten Vermittlungseinrichtungen MSC/VLR verbunden. Den Vermittlungseinrichtungen MSC/VLR ist dabei jeweils ein Besucherregister VLR zugeordnet, in dem der mobile Teilnehmer für die Dauer seines Aufenthalts im Einzugsbereich dieser Vermittlungseinrichtung registriert ist. Die Kommunikation des Heimatregisters mit den Vermittlungseinrichtungen MSC/VLR erfolgt über die MAP-Signalisierung (Mobile Application Part).

Vom mobilen Teilnehmer A abgehende Verbindungsaufbaumeldungen werden in der Vermittlungseinrichtung VLR/MSC, in deren Einzugsbereich sich der mobile Teilnehmer A befindet, zuerst verarbeitet. Dort ist die Abfrage von Diensten - insbesondere den Zusatzdiensten und anbieterspezifischen Zusatzdiensten - zu veranlassen. Die Speichereinheiten HLR, VLR enthalten Informationen über zusätzliche Dienste, die für den Teilnehmer A nutzbar sind, wobei Informationen zu den zusätzlichen Diensten über ein "Location Update" in das Besucherregister VLR gelangen. Diese zusätzlichen Informationen sind dabei mit den Teilnehmerdaten eines Teilnehmers, z.B. in Tabellenform, einem Teilnehmer zugeordnet. Für das vorliegende Beispiel besteht der Dienst im Bereitstellen von Ansagen für den anrufenden mobilen Teilnehmer A. Die flexible und ortsunabhängige Steuerung und Inanspruchnahme der Ansagen soll anhand der weiteren Figuren erläutert werden.

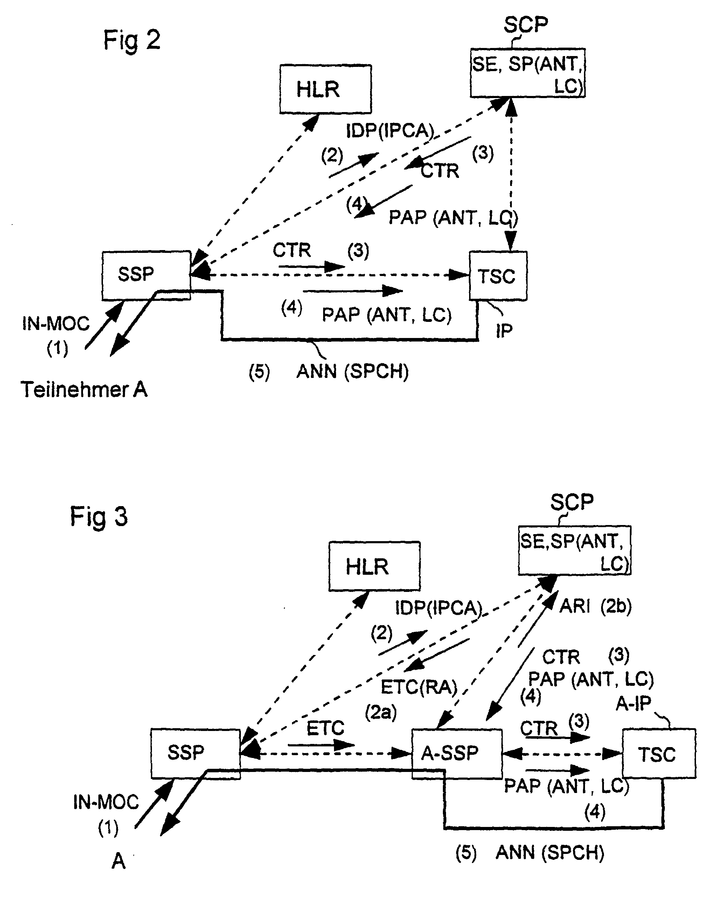

Die FIG 2 bis 4 zeigen Grundkonstellationen für den Ablauf des erfindungsgemäßen Verfahrens. In FIG 2 werden während eines Location Updates LUP Teilnehmerdaten aus dem Heimatregister HLR unter Verwendung des MAP-Protokolls in das Besucherregister VLR bei der Dienstevermittlungseinheit SSP übertragen. Ist der Teilnehmer A für abgehende Gespräche für zusätzlichen Dienste registriert, wird zusätzlich eine diesbezügliche Teilnehmerinformation übertragen und im Besucherregister VLR gespeichert. Bei Einleitung eines abgehenden Gespräches durch den Teilnehmer A erfolgt von der Dienstevermittlungseinheit SSP eine diesbezügliche Auswertung.

Im vorliegenden Beispiel handelt es sich um einen abgehenden Anruf IN-MOC des Teilnehmers A, bei dem eine Verbindungsaufmeldung über die für ihn zuständige Vermittlungseinrichtung zur Dienstevermittlungseinheit SSP gelangt (1). Die Dienstevermittlungseinheit SSP verfügt über Einrichtungen zum Auswerten der Meldung und zum Aussenden einer initiierenden Nachricht IDP (Initial Detection Point) über das INAP-Protokoll zur Dienstesteuerungseinheit SCP (2). In der Nachricht IDP sind Informationen IPCA (Intelligent Peripheral Capabilities) enthalten, die angeben, welche Eigenschaften hinsichtlich der Ansagen wie z.B. Sprache, Sprachumfang usw. in der mit der Dienstevermittlungseinheit SSP in Verbindung stehenden Ansageeinheit IP vorliegen. Die in der Dienstesteuerungseinheit SCP empfangenen Informationen IPCA hinsichtlich der Unterstützbarkeit von Ansagen werden von einer Einrichtung SE ausgewertet, was z.B. anhand eines Vergleichs mit in Tabellenform hinterlegten Anforderungen erfolgen kann. Bei ausreichender Unterstützung durch die Dienstevermittlungseinheit SSP bzw. Ansageeinheit IP sendet die Dienstesteuerungseinheit SCP eine Nachricht CTR (Connect To Ressource) zurück, mit der die Zustimmung zur Ansteuerung der Ansageeinheit IP der Dienstevermittlungseinheit SSP signalisiert wird. Mit Empfang der Nachricht CTR in der Dienstevermittlunhseinheit SSP wird unmittelbar die Ansageeinheit IP angeschaltet, symbolisch dargestellt in FIG 2 durch das Senden der Nachricht CTR an die Ansageeinheit IP. (3).

Die Dienstesteuerungseinheit SCP verfügt auch über Einrichtungen SP zum Speichern von Ansagetexten ANT, die z.B. in Form von ASCII-Texten eingerichtet sind. Dabei können zu den Ansagetexten ANT weitere Informationen LC zur Kennzeichnung landessprachlicher Eigenschaften der Ansage gespeichert werden. So umfassen diese Informationen LC einen oder mehrere Landescodes zur Identifikation der Sprache, in der die Ansage des empfangenen Ansagetextes durch die Ansageeinheit zu erfolgen hat. Die Ansagetexte ANT und die oben genannten Informationen können z.B. durch ein übergeordnetes Steuerungs- und Verwaltungssystem (Service Management Point oder Operation and Maintenance Center) mittels Signalisierung in der Dienstesteuerungseinheit SCP an zentraler Stelle eingerichtet werden. Sobald von der Einrichtung SE in Verbindung mit der Einrichtung SP der oder die Ansagetexte ANT ausgewählt sind, werden sie vorzugsweise mit den Informationen LC in einer Nachricht PAP (Play Announcement oder Prompt and Collect) gesendet, von der Dienstevermittlungseinheit SSP empfangen und von dort an die Ansageeinheit IP weitergeleitet (4). Alternativ dazu ist es möglich, die Nachricht PAP mit den beschriebenen Informationen auch direkt zwischen Dienstesteuerungseinheit SCP und Ansageeinheit IP auszutauschen.

Die Ansageeinheit IP weist eine Einrichtung TSC zum Umsetzen des empfangenen Ansagetextes ANT in eine Ansage ANN auf. Dies kann z.B. durch einen Text-Audio-Wandler erfolgen, der gegebenenfalls unter Berücksichtigung der zusätzlich empfangenen Informationen LC die Umsetzung des Textes in Sprache ausführt. Die auf diese Weise erzeugte Ansage ANN wird von der an die Dienstevermittlungseinheit SSP angeschlossenen Ansageeinheit IP über den in der Vermittlungseinrichtung geschalteten Sprachkanal SPCH zum Teilnehmer A übertragen (5).

Die FIG 3 zeigt eine leicht abgewandelte Konstellation gegenüber FIG 2, da eine weitere Dienstevermittlungseinheit A-SSP (Assisting Service Switching Point) hinzukommt. Die Nachrichtenübertragung gemäß den Schritten (1) und (2) ist identisch zu FIG 2. Im Gegensatz zu dem oben Beschriebenen ergibt die Überprüfung der Informationen IPCA in der Einrichtung SE der Dienstesteuerungseinheit SCP, daß keine ausreichende Unterstützung durch die an die Dienstevermittlungseinheit angeschlossene Ansageeinheit gegeben ist. Daher sendet die Dienstesteuerungseinheit SCP eine Nachricht ETC (Establish Temporary Connection), mit der um Aufbau einer vorübergehenden Signalisierungsverbindung und Sprachverbindung durch eine zur Unterstützung der Ansagen geeignete Dienstevermittlungseinheit gebeten wird. Diese andere Dienstevermittlungseinheit ist im dargestellten Beispiel die Dienstevermittlungseinheit A-SSP, die durch eine in der Nachricht ETC enthaltene Routingadresse RAD der ursprünglichen Dienstevermittlungseinheit SSP mitgeteilt wird (2a). Darüber hinaus ist die Dienstevermittlungseinheit A-SSP auch in die Sprachkanalverbindung zum Teilnehmer einzuschleifen. Die ausgewählte Dienstevermittlungseinheit A-SSP sendet eine Nachricht ARI (Assisted Request Instruction) zur Dienstesteuerungseinheit SCP, um dieser den Kommunikationspartner für die Bereitstellung der Ansage bekanntzugeben (2b).

Daraufhin sendet die Dienstesteuerungsseinheit SCP - entsprechend zur Vorgehensweise in FIG 2 - nacheinander die Nachrichten CTR und PAP, in der der Ansagetext ANT und die Informationen LC enthalten sind, zu der jetzt zuständigen Dienstevermittlungseinheit A-SSP aus, die die empfangenen Nachrichten CTR und PAP jeweils an die zugehörige Ansageeinheit A-IP weiterleitet (3, 4). Es folgt die Umsetzung des empfangenen Ansagetextes ANT in Sprache durch die Einrichtung TSC. Die auf diese Weise ermittelte Ansage ANN wird von der Ansageeinheit A-IP über den Sprachkanal SPCH, der in den beiden Dienstevermittlungseinheiten A-SSP und SSP zugeordneten Vermittlungseinrichtungen geschaltet ist, zum Teilnehmer A übertragen (5).

FIG 4 beschreibt den Fall, daß sich der Teilnehmer A nicht in seinem Heimatnetz HPLMN, sondern in einem fremden Netz, dem Besuchernetz VPLMN aufhält. Gemäß der CAMEL Plattform ist eine Kommunikation über die Grenze zweier Netze HPLMN, VPLMN hinweg zur Inanspruchnahme von Diensten möglich. Der Gesprächsaufbau geht wiederum vom mobilen Teilnehmer A über sein Kommunikationsendgerät aus. Die Verbindungsaufbaumeldung erreicht die für ihn aktuell zuständige Vermittlungseinrichtung MSC des fremden Netzes VPLMN, in deren Einzugsbereich sich die Mobilstation des Teilnehmers befindet. Die der Vermittlungseinrichtung MSC zugeordnete Dienstevermittlungseinheit SSP' sendet die Nachricht IDP mit den Informationen IPCA aus, die netzübergreifend durch die CAP-Signalisierung zur Dienstesteuerungseinheit SCP mit den Einrichtungen SE und SP übertragen wird. In gleicher Weise wie in FIG 2 werden anschließend die Nachrichten CTR, PAP mit den Ansagetexten ANT und den Informationen LC erzeugt und zwischen der Dienstesteuerungseinheit SCP, der Dienstevermittlungseinheit SSP' und einer zugehörigen Ansageeinheit IP'ausgetauscht. Zusätzlich zur Konstellation von FIG 2 erfolgt der Nachrichtenfluß über die Netzgrenze der beiden Netze HPLMN und VPLMN hinweg. Eine Einrichtung TSC' zur Text-Sprach-Umwandlung in der Ansageeinheit IP' liefert die Ansage ANN, die über die Dienstevermittlungseinheit auf dem in der Vermittlungseinrichtung MSC geschalteten Sprachkanal SPCH im Besuchernetz VPLMN dem Teilnehmer eingespielt wird. Auf diese Weise können den in fremden Netzen "roamenden" Teilnehmern die Ansagen in seiner Heimatsprache oder zumindest in einer für ihn verständlichen Sprache flexibel und ohne zusätzliche Signalisierungslast oder Leitungsbelegung bereitgestellt werden.

## Patentansprüche

1. Verfahren zur Bereitstellung von Ansagen in einem Kommunikationsnetz (KN)
- mit vernetzten Vermittlungseinrichtungen (MSC/VLR), an die über weitere Einrichtungen (BS) den Zugang von Teilnehmern (A) ermöglichende Kommunikationsendgeräte (MS) anschließbar sind und/oder über die Übergänge zu mindestens einem weiteren Netz bewirkt werden können,
- mit zumindest einer die Ansage steuernden Dienstesteuerungseinheit (SCP) und
- mit zumindest einer Dienstevermittlungseinheit (SSP, A-SSP), die jeweils mit einer Ansageeinheit (IP, A-IP) zur Bereitstellung von Ansagen für einen anrufenden Teilnehmer (A) verbunden werden kann,
**dadurch gekennzeichnet, daß**
- ein oder mehrere Ansagetexte (ANT) in der Dienstesteuerungseinheit (SCP) eingerichtet werden,
- eine auf Grund eines Anrufs des Teilnehmers (A) initiierte Nachricht (IDP), in der Informationen (IPCA) über die Unterstützbarkeit von Ansagen durch eine Ansageeinheit (IP) enthalten sind, von der Dienstesteuerungseinheit (SCP) empfangen und ausgewertet wird,
- bei Unterstützung der Ansage durch eine Ansageeinheit (IP, A-IP) eine Nachricht (PAP), in der der Ansagetext (ANT) enthalten ist, von der Dienstesteuerungseinheit (SCP) ausgesendet wird, und bei dem
- von der Ansageeinheit (IP, A-IP) ein empfangener Ansagetext (ANT) in eine Ansage (ANN) umgesetzt wird, die auf einem Sprachkanal (SPCH) zum anrufenden Teilnehmer (A) übertragen wird.

2. Verfahren nach Anspruch 1, bei dem
die Nachricht (IDP) mit den Informationen (IPCA) über die Unterstützbarkeit von Ansagen von einer ersten, den anrufenden Teilnehmer (A) bedienenden Dienstevermittlungseinheit (SSP) erzeugt und zur Dienstesteuerungseinheit (SCP) übertragen wird.

3. Verfahren nach Anspruch 2, bei dem
bei ausreichender Unterstützung der Ansage durch eine an die erste Dienstevermittlungseinheit (SSP) angeschlossene Ansageeinheit (IP) die den Ansagetext (ANT) enthaltende Nachricht (PAP) über die erste Dienstevermittlungseinheit (SSP) zur Ansageeinheit (IP) gelenkt wird.

4. Verfahren nach Anspruch 2, bei dem
bei nicht ausreichender Unterstützung der Ansage durch eine an die erste Dienstevermittlungseinheit (SSP) angeschlossene Ansageeinheit (IP) die Dienstesteuerungseinheit (SCP) eine zweite Dienstevermittlungseinheit (A-SSP) auswählt, über die die den Ansagetext (ANT) enthaltende Nachricht (PAP) zu der angeschlossenen Ansageeinheit (A-IP) gelenkt wird.

5. Verfahren nach Anspruch 2, bei dem
die den Ansagetext (ANT) enthaltende Nachricht (PAP) von der Dienstesteuerungseinheit (SCP) direkt zu einer für die Unterstützung der Ansage geeigneten Ansageeinheit (IP) gesendet wird.

6. Verfahren nach einem der vorhergehenden Ansprüche, bei dem in der den Ansagetext (ANT) enthaltenden Nachricht (PAP) zusätzlich Informationen (LC) zur Kennzeichnung landessprachlicher Eigenschaften der Ansage übertragen werden.

7. Verfahren nach Anspruch 6, bei dem
die Informationen (LC) zumindest einen Sprachkode zur Identifikation der Sprache enthält, in der die Ansage des empfangenen Ansagetextes (ANT) durch die Ansageeinheit (IP, A-IP) erfolgt.

8. Verfahren nach einem der vorhergehenden Ansprüche, bei dem bei dem das Kommunikationsnetz (KN) als Mobilfunknetz ausgebildet ist.

9. Verfahren nach Anspruch 8, bei dem
die Dienstevermittlungseinheit (SSP) und die Dienstesteuerungseinheit (SCP) zu räumlich getrennten Kommunikationsnetzen gehören.

10. Verfahren nach Anspruch 8 oder 9, bei dem
bei einem Anruf eines mobilen Teilnehmers, der sich in einem Besuchernetz (VPLMN) und nicht in seinem Heimatnetz (HPLMN) aufhält, die Nachricht (IDP) mit den Informationen (IPCA) über die Unterstützbarkeit von Ansagen zur Dienstesteuerungseinheit (SCP) im Heimatnetz (HPLMN) und die Nachricht (PAP) mit dem Ansagetext (ANT) zu der den mobilen Teilnehmer bedienenden Dienstevermittlungseinheit (SSP') im Besuchernetz (VPLMN) jeweils netzübergreifend übertragen werden, und bei dem im Besuchernetz (VPLMN) die Ansage (ANN) aus dem empfangenen Ansagetext (ANT) von einer Ansageeinheit (IP') erzeugt und zu dem anrufenden Teilnehmer (A) auf dem Sprachkanal (SPCH) übertragen wird.

11. Dienstesteuerungseinheit (SCP) zum Steuern von in einem Kommunikationsnetz (KN) bereitzustellenden Ansagen
- mit vernetzten Vermittlungseinrichtungen (MSC/VLR), an die über weitere Einrichtungen (BS) den Zugang von Teilnehmern (A) ermöglichende Kommunikationsendgeräte (MS) anschließbar sind und/oder über die Übergänge zu mindestens einem weiteren Netz bewirkt werden können,
- mit zumindest einer Dienstevermittlungseinheit (SSP, A-SSP), die jeweils mit einer Ansageeinheit (IP, A-IP) zur Bereitstellung von Ansagen für einen anrufenden Teilnehmer (A) verbunden werden kann,
**dadurch gekennzeichnet, daß** die Dienstesteuerungseinheit (SCP)
- Mittel (SP) zum Speichern eines oder mehrerer Ansagetexte (ANT) aufweist,
- Mittel (SE) zum Speichern und Auswerten einer auf Grund eines Anrufs des Teilnehmers (A) initiierten Nachricht (IDP) aufweist, in der Informationen (IPCA) über die Unterstützbarkeit von Ansagen durch eine Ansageeinheit (IP) enthalten sind, und
- Mittel (SE) zum Aussenden einer Nachricht (PAP), in der der Ansagetext (ANT) enthalten ist, zu einer die Ansage unterstützenden Ansageeinheit (IP, A-IP) aufweist, von der der empfangene Ansagetext (ANT) in eine Ansage (ANN) umgesetzt wird, die auf einem Sprachkanal (SPCH) zum anrufenden Teilnehmer (A) übertragen wird.

12. Dienstevermittlungseinheit (SSP, A-SSP) zum Vermitteln von in einem Kommunikationsnetz (KN) bereitzustellenden Ansagen
- mit vernetzten Vermittlungseinrichtungen (MSC/VLR), an die über weitere Einrichtungen (BS) den Zugang von Teilnehmern (A) ermöglichende Kommunikationsendgeräte (MS) anschließbar sind und/oder über die Übergänge zu mindestens einem weiteren Netz bewirkt werden können,
- mit zumindest einer Dienstesteuerungseinheit (SCP), in der Ansagetexte (ANT) eingerichtet sind,
- mit an die Dienstevermittlungseinheit (SSP, A-SSP) angeschlossener Ansageeinheit (IP, A-IP) zur Bereitstellung von Ansagen für einen anrufenden Teilnehmer (A),
**dadurch gekennzeichnet, daß** die Dienstevermittlungseinheit (SSP) Mittel zum Empfang einer Nachricht (PAP) aufweist, in der der Ansagetext (ANT) enthalten ist; und Mittel zum Aussenden des Ansagetextes (ANT) zu einer die Ansage unterstützenden Ansageeinheit (IP, A-IP) aufweist, von der der empfangene Ansagetext (ANT) in eine Ansage (ANN) umgesetzt wird, die auf einem Sprachkanal (SPCH) zum anrufenden Teilnehmer (A) übertragen wird.

13. Ansageeinheit (IP, A-IP) zur Bereitstellung von Ansagen in einem Kommunikationsnetz (KN)
- mit vernetzten Vermittlungseinrichtungen (MSC/VLR), an die über weitere Einrichtungen (BS) den Zugang von Teilnehmern
- (A) ermöglichende Kommunikationsendgeräte (MS) anschließbar sind und/oder über die Übergänge zu mindestens einem weiteren Netz bewirkt werden können,
- mit zumindest einer die Ansage steuernden Dienstesteuerungseinheit (SCP), in der Ansagetexte (ANT) eingerichtet sind, und
- mit zumindest einer Dienstevermittlungseinheit (SSP, A-SSP), die jeweils mit einer Ansageeinheit (IP, A-IP) zur Bereitstellung von Ansagen für einen anrufenden Teilnehmer (A) verbunden werden kann,
**dadurch gekennzeichnet, daß** die Ansageeinheit (IP, A-IP) Mittel zum Empfang einer Nachricht (PAP) aufweist, in der ein Ansagetext (ANT) enthalten ist, und Mittel (TSC) zum Umsetzen des Ansagetextes (ANT) in eine Ansage (ANN) aufweist, die auf einem Sprachkanal (SPCH) zum anrufenden Teilnehmer (A) übertragen wird.

14. Kommunikationsnetz zur Bereitstellung von Ansagen
- mit vernetzten Vermittlungseinrichtungen (MSC/VLR), an die über weitere Einrichtungen (BS) den Zugang von Teilnehmern (A) ermöglichende Kommunikationsendgeräte (MS) anschließbar sind und/oder über die Übergänge zu mindestens einem weiteren Netz bewirkt werden können,
- mit zumindest einer die Ansage steuernden Dienstesteuerungseinheit (SCP) und
- mit zumindest einer Dienstevermittlungseinheit (SSP, A-SSP), die jeweils mit einer Ansageeinheit (IP, A-IP) zur Bereitstellung von Ansagen für einen anrufenden Teilnehmer (A) verbunden werden kann,
**dadurch gekennzeichnet, daß** die Dienstesteuerungseinheit (SCP) derart ausgestaltet ist, daß
- ein oder mehrere Ansagetexte (ANT) eingerichtet sind,
- eine auf Grund eines Anrufs des Teilnehmers (A) initiierte Nachricht (IDP), in der Informationen (IPCA) über die Unterstützbarkeit von Ansagen durch eine Ansageeinheit (IP) enthalten sind, empfangen und ausgewertet wird,
- bei Unterstützung einer Ansage durch eine Ansageeinheit (IP, A-IP) eine Nachricht (PAP), in der der Ansagetext (ANT) enthalten ist, ausgesendet wind, und bei dem die Ansageeinheit (IP, A-IP) derart ausgestaltet ist, daß eine aus einem empfangenen Ansagetext (ANT) von der Ansageeinheit umgesetzte Ansage (ANN) auf einem Sprachkanal (SPCH) zum anrufenden Teilnehmer (A) übertragen wird.

## Claims

1. Method for providing announcements in a communications network (KN)
- having networked switching devices (MSC/VLR) to which communications terminals (MS) allowing access by subscribers (A) can be connected via further devices (BS), and/or via which gateways can be formed to at least one further network,
- having at least one service control unit (SCP) controlling the announcement, and
- having at least one service switching unit (SSP, A-SSP) which can in each case be connected to an announcement unit (IP, A-IP) for providing announcements for a calling subscriber (A),
**characterized in that**
- one or more announcement texts (ANT) are set up in the service control unit (SCP),
- a message (IDP) which is initiated on the basis of a call by a subscriber (A) and which contains information (IPCA) about the capability of the announcement unit (IP) to support announcements is received and evaluated by the service control unit (SCP),
- if an announcement unit (IP, A-IP) can support the announcement, a message (PAP), which contains the announcement text (ANT) is transmitted from the service control unit (SCP), and **in that**
- the announcement unit (IP, A-IP) converts a received announcement text (ANT) to an announcement (ANN), which is transmitted on a speech channel (SPCH) to the calling subscriber (A).

2. Method according to Claim 1, in which
the message (IDP) with the information (IPCA) about the capability of a first service switching unit (SSP), which is dealing with the calling subscriber (A), to support announcements is produced, and is transmitted to the service control unit (SCP).

3. Method according to Claim 2, in which
if an announcement unit (IP) which is connected to the first service switching unit (SSP) can provide sufficient -support for the announcement, the message (PAP) which contains the announcement text (ANT) is passed via the first service switching unit (SSP) to the announcement unit (IP).

4. Method according to Claim 2, in which
if an announcement unit (IP) which is connected to the first service switching unit (SSP) cannot provide sufficient support for the announcement, the service control unit (SCP) selects a second service switching unit (A-SSP) via which the message (PAP) which contains the announcement text (ANT) is passed to the connected announcement unit (A-IP).

5. Method according to Claim 2, in which
the message (PAP) which contains the announcement text (ANT) is sent directly from the service control unit (SCP) to an announcement unit (IP) which is suitable for supporting the announcement.

6. Method according to one of the preceding claims, in which
the message (PAP) which contains the announcement text (ANT) is also used to transmit information (LC) to identify national language characteristics of the announcement.

7. Method according to Claim 6, in which
the information (LC) contains at least a language code for identification of the language in which the announcement of the received announcement text (ANT) will be made by the announcement unit (IP, A-IP).

8. Method according to one of the preceding claims, in which
the communications network (KN) is a mobile radio network.

9. Method according to Claim 8, in which
the service switching unit (SSP) and the service control unit (SCP) belong to physically separate communications networks.

10. Method according to Claim 8 or 9, in which
when a call is made by a mobile subscriber who is located in a visitor network (VPLMN) and not in his home network (HPLMN), the message (IDP) with the information (IPCA) relating to the capability to support announcements for the service control unit (SCP) in the home network (HPLMN) and the message (PAP) with the announcement text (ANT) are in each case transmitted crossing over between networks to that service switching unit (SSP') which is dealing with the mobile subscriber in the visitor network (VPLMN), and in which the announcement (ANN) is produced in the visitor network (VPLM) from the announcement text (ANT) received by an announcement unit (IF'), and is transmitted to the calling subscriber (A) on the speech channel (SPCH).

11. Service control unit (SCP) for controlling announcements to be provided in a communications network (KN)
- having networked switching devices (MSC/VLR) to which communications terminals (MS) allowing access by subscribers (A) can be connected via further devices (BS), and/or via which gateways can be formed to at least one further network,
- having at least one service switching unit (SSP, A-SSP) which can in each case be connected to an announcement unit (IP, A-IP) for providing announcements for a calling subscriber (A),
**characterized in that** the service control unit (SCP)
- has means (SP) for storing one or more announcement texts (ANT),
- has means (SE) for storing and evaluating a message (IDP) which is initiated on the basis of a call from a subscriber (A) and which contains information (IPCA) relating to the capability of an announcement unit (IP) to support announcements, and
- has means (SE) for transmitting a message (PAP) which contains the announcement text (ANT) to an announcement unit (IP, A-IP) which supports the announcement and which converts the received announcement text (ANT) to an announcement (ANN) which is transmitted on a speech channel (SPCH) to the calling subscriber (A).

12. Service switching unit (SSP, A-SSP) for switching announcements to be provided in a communications network (KN)
- having networked switching devices (MSC/VLR) to which communications terminals (MS) allowing access by subscribers (A) can be connected via further devices (BS), and/or via which gateways can be formed to at least one further network,
- having at least one service control unit (SCP) in which announcement texts (ANT) are set up,
- having an announcement unit (IP, A-IP), which is connected to the service switching unit (SSP, A-SSP), for providing announcements for a calling subscriber (A),
**characterized in that** the service switching unit (SSP) has means for receiving a message (PAP) which contains the announcement text (ANT) and has means for transmitting the announcement text (ANT) to an announcement unit (IP, A-IP) which supports the announcement and which converts the received announcement text (ANT) to an announcement (ANN) which is transmitted on a speech channel (SPCH) to the calling subscriber (A).

13. Announcement unit (IP, A-IP) for providing announcements in a communications network (KN)
- having networked switching devices (MSC/VLR) to which communications terminals (MS) allowing access by subscribers (A) can be connected via further devices (BS), and/or via which gateways can be formed to at least one further network,
- having at least one service control unit (SCP) which controls the announcement and in which announcement texts (ANT) are set up, and
- having at least one service switching unit (SSP, A-SSP) which can in each case be connected to an announcement unit (IP, A-IP) for providing announcements for a calling subscriber (A),
**characterized in that** the announcement unit (IP, A-IP) has means for receiving a message (PAP) which contains an announcement text (ANT) and has means (TSC) for converting the announcement text (ANT) to an announcement (ANN) which is transmitted on a speech channel (SPCH) to the calling subscriber (A).

14. Communications network for providing announcements
- having networked switching devices (MSC/VLR) to which communications terminals (MS) allowing access by subscribers (A) can be connected via further devices (BS), and/or via which gateways can be formed to at least one further network,
- having at least one service control unit (SCP) controlling the announcement, and
- having at least one service switching unit (SSP, A-SSP) which can in each case be connected to an announcement unit (IP, A-IP) for providing announcements for a calling subscriber (A),
**characterized in that** the service control unit (SCP) is designed such that
- one or more announcement texts (ANT) are set up,
- a message (IDP) which is initiated on the basis of a call from the subscriber (A) and which contains information (IPCA) relating to the capability of an announcement unit (IP) to support announcements is received and is evaluated,
- if an announcement unit (IP, I-AP) supports an announcement, a message (PAP) which contains the announcement text (ANT) is transmitted, and **in that** the announcement unit (IP, A-IP) is designed such that an announcement (ANN) which is converted by the announcement unit from a received announcement text (ANT) is transmitted on a speech channel (SPCH) to the calling subscriber (A).

## Revendications

1. Procédé pour la fourniture d'annonces dans un réseau de communication (KN),
- avec des dispositifs de commutation en réseau (MSC/VLR) auxquels des terminaux de communication (MS) permettant l'accès d'abonnés (A) peuvent être raccordés par l'intermédiaire d'autres dispositifs (BS) et/ou par l'intermédiaire desquels des passerelles vers au moins un autre réseau peuvent être créées,
- avec au moins une unité de commande de services (SCP) commandant l'annonce, et
- avec au moins une unité de commutation de services (SSP, A-SSP) qui peut être reliée à chaque fois à une unité d'annonces (IP, A-IP) pour la fourniture d'annonces pour un abonné appelant (A),
**caractérisé par le fait que**
- un ou plusieurs textes d'annonces (ANT) sont créés dans l'unité de commande de services (SCP),
- un message (IDP) qui est initié en raison d'un appel de l'abonné (A) et qui contient des informations (IPCA) sur la possibilité de soutien d'annonces par une unité d'annonces (IP) est reçu et évalué par l'unité de commande de services (SCP),
- lors du soutien de l'annonce par une unité d'annonces (IP, A-IP), un message (PAP) contenant le texte d'annonce (ANT) est émis par l'unité de commande de services (SCP), et
- l'unité d'annonces (IP, A-IP) transforme un texte d'annonce reçu (ANT) en une annonce (ANN) qui est transmise sur un canal vocal (SPCH) vers l'abonné appelant (A).

2. Procédé selon la revendication 1, dans lequel le message (IDP) avec les informations (IPCA) sur la possibilité de soutien d'annonces est produit par une première unité de commutation de services (SSP) servant l'abonné appelant (A) et est transmis vers l'unité de commande de services (SCP).

3. Procédé selon la revendication 2, dans lequel, en cas de soutien suffisant de l'annonce par une unité d'annonces (IP) raccordée à la première unité de commutation de services (SSP), le message (PAP) contenant le texte d'annonces (ANT) est dirigé par l'intermédiaire de la première unité de commutation de services (SSP) vers l'unité d'annonces (IP).

4. Procédé selon la revendication 2, dans lequel, en cas de soutien insuffisant de l'annonce par une unité d'annonces (IP) raccordée à la première unité de commutation de services (SSP), l'unité de commande de services (SCP) sélectionne une deuxième unité de commutation de services (A-SSP) par l'intermédiaire de laquelle le message (PAP) contenant le texte d'annonce (ANT) est dirigé vers l'unité d'annonces (A-IP) raccordée.

5. Procédé selon la revendication 2, dans lequel le message (PAP) contenant le texte d'annonce (ANT) est envoyé directement par l'unité de commande de services (SCP) à une unité d'annonces (IP) convenant au soutien de l'annonce.

6. Procédé selon l'une des revendications précédentes, dans lequel des informations (LC) pour la caractérisation de propriétés d'annonce se rapportant à la langue nationale sont transmises en plus dans le message (PAP) contenant le texte d'annonce (ANT).

7. Procédé selon la revendication 6, dans lequel les informations (LC) contiennent au moins un code de langue pour l'identification de la langue dans laquelle l'annonce du texte d'annonce (ANT) reçu est effectuée par l'unité d'annonces (IP, A-IP).

8. Procédé selon l'une des revendications précédentes, dans lequel le réseau de communication (KN) est conçu comme un réseau de radiocommunication du service mobile.

9. Procédé selon la revendication 8, dans lequel l'unité de commutation de services (SSP) et l'unité de commande de services (SCP) appartiennent à des réseaux de communication séparés dans l'espace.

10. Procédé selon la revendication 8 ou 9, dans lequel, lors d'un appel d'un abonné mobile qui séjourne dans un réseau visité (VPLMN) et non dans son réseau de rattachement (HPLMN), le message (IDP) avec les informations (IPCA) sur la possibilité de soutien d'annonces est transmis vers l'unité de commande de services (SCP) dans le réseau de rattachement (HPLMN) et le message (PAP) avec le texte d'annonce (ANT) est transmis vers l'unité de commutation de services (SSP') servant l'abonné mobile dans le réseau visité (VPLMN), dans les deux cas au-delà du réseau, et dans lequel l'annonce (ANN) est produite dans le réseau visité (VPLMN) à partir du texte d'annonce reçu (ANT) par une unité d'annonces (IP') et est transmis vers l'abonné appelant (A) sur le canal vocal (SPCH).

11. Unité de commande de services (SCP) pour la commande d'annonces à fournir dans un réseau de communication (KN),
- avec des dispositifs de commutation en réseau (MSC/VLR) auxquels des terminaux de communication (MS) permettant l'accès d'abonnés (A) peuvent être raccordés par l'intermédiaire d'autres dispositifs (BS) et/ou par l'intermédiaire desquels des passerelles vers au moins un autre réseau peuvent être créées,
- avec au moins une unité de commutation de services (SSP, A-SSP) qui peut être reliée à chaque fois à une unité d'annonces (IP, A-IP) pour la fourniture d'annonces pour un abonné appelant (A),
**caractérisée par le fait que** l'unité de commande de services (SCP) comporte
- des moyens (SP) pour la mémorisation d'un ou plusieurs textes d'annonces (ANT),
- des moyens (SE) pour la mémorisation et l'évaluation d'un message (IDP) qui a été initié en raison d'un appel de l'abonné (A) et qui contient des informations (IPCA) sur la possibilité de soutien d'annonces par une unité d'annonces (IP), et
- des moyens (SE) pour l'émission d'un message (PAP) contenant le texte d'annonce (ANT) vers une unité d'annonces (IP, A-IP) qui soutient l'annonce et qui transforme le texte d'annonce reçu (ANT) en une annonce (ANN) qui est transmise sur un canal vocal (SPCH) vers l'abonné appelant (A).

12. Unité de commutation de services (SSP, A-SSP) pour la commutation d'annonces à fournir dans un réseau de communication (KN),
- avec des dispositifs de commutation en réseau (MSCNLR) auxquels des terminaux de communication (MS) permettant l'accès d'abonnés (A) peuvent être raccordés par l'intermédiaire d'autres dispositifs (BS) et/ou par l'intermédiaire desquels des passerelles vers au moins un autre réseau peuvent être créées,
- avec au moins une unité de commande de services (SCP) dans laquelle des textes d'annonces (ANT) sont créés, et
- avec une unité d'annonces (IP, A-IP) raccordée à l'unité de commutation de services (SSP, A-SSP) afin de fournir des annonces pour un abonné appelant (A),
**caractérisée par le fait que** l'unité de commutation de services (SSP) comporte des moyens pour la réception d'un message (PAP) contenant le texte d'annonce (ANT), et des moyens pour l'émission du texte d'annonce (ANT) vers une unité d'annonces (IP, A-IP) qui soutient l'annonce et qui transforme le texte d'annonce reçu (ANT) en une annonce (ANN) qui est transmise sur un canal vocal (SPCH) vers l'abonné appelant (A).

13. Unité d'annonces (IP, A-IP) pour la fourniture d'annonces dans un réseau de communication (KN),
- avec des dispositifs de commutation en réseau (MSC/VLR) auxquels des terminaux de communication (MS) permettant l'accès d'abonnés (A) peuvent être raccordés par l'intermédiaire d'autres dispositifs (BS) et/ou par l'intermédiaire desquels des passerelles vers au moins un autre réseau peuvent être créées,
- avec au moins une unité de commande de services (SCP) dans laquelle des textes d'annonces (ANT) sont créés, et
- avec au moins une unité de commutation de services (SSP, A-SSP) qui peut être reliée à chaque fois à une unité d'annonces (IP, A-IP) pour la fourniture d'annonces pour un abonné appelant (A),
**caractérisée par le fait que** l'unité d'annonces (IP, A-IP) comporte des moyens pour la réception d'un message (PAP) contenant un texte d'annonce (ANT) et des moyens (TSC) pour la transformation du texte d'annonce (ANT) en une annonce (ANN) qui est transmise sur un canal vocal (SPCH) vers l'abonné appelant (A).

14. Réseau de communication pour la fourniture d'annonces,
- avec des dispositifs de commutation en réseau (MSC/VLR) auxquels des terminaux de communication (MS) permettant l'accès d'abonnés (A) peuvent être raccordés par l'intermédiaire d'autres dispositifs (BS) et/ou par l'intermédiaire desquels des passerelles vers au moins un autre réseau peuvent être créées,
- avec au moins une unité de commande de services (SCP) commandant l'annonce, et
- avec au moins une unité de commutation de services (SSP, A-SSP) qui peut être reliée à chaque fois à une unité d'annonces (IP, A-IP) pour la fourniture d'annonces pour un abonné appelant (A),
**caractérisé par le fait que** l'unité de commande de services (SCP) est conçue de telle sorte que
- un ou plusieurs textes d'annonces (ANT) sont créés,
- un message (IDP) qui est initié en raison d'un appel de l'abonné (A) et qui contient des informations (IPCA) sur la possibilité de soutien d'annonces par une unité d'annonces (IP) est reçu et évalué,
- lors du soutien de l'annonce par une unité d'annonces (IP, A-IP), un message (PAP) contenant le texte d'annonce (ANT) est émis, et l'unité d'annonces (IP, A-IP) est conçue de telle sorte qu'une annonce (ANN) transformée par l'unité d'annonces à partir d'un texte d'annonce reçu (ANT) est transmise sur un canal vocal (SPCH) vers l'abonné appelant (A).
